# EUROPEAN PATENT SPECIFICATION

(11) **EP 1 428 925 B1**
(45) Date of publication and mention of the grant of the patent: **19.05.2010**
(21) Application number: 03028284.2
(22) Date of filing: 10.12.2003
(51) Int. Cl.: D06F 39/00

(54) **Washing machine control method with automatic load detection**
Verfahren zur Steuerung einer Waschmaschine mit automatischer Ermittlung von Beladung
Méthode de contrôle pour une machine à laver avec détermination automatique de la charge

(30) Priority: 10.12.2002 KR 2002078289
(43) Date of publication of application: 16.06.2004
(73) Proprietor: LG Electronics, Inc., Seoul 150-010 (KR)
(72) Inventor: Oh, Soo Young, Seoul (KR); Kim, Jin Woong, Gwangmyeong-si Gyeonggi-do (KR); Seo, Hyun Seok, Incheon-si (KR); Lee, Tae Hee, Seoul (KR); Kim, Joon Woo, Gyeonggi-do (KR); Woo, Kyung Chul, Seoul (KR)
(74) Representative: Schorr, Frank Jürgen

(56) References cited:
- EP-A- 0 704 568
- EP-A- 1 201 811
- GB-A- 2 247 250
- GB-A- 2 325 245
- US-A- 4 857 814
- US-A- 5 341 452
- US-A- 5 507 054
- US-A1- 2002 029 428

## Description

The present invention relates to washing machines, and more particularly, to a washing machine control method, in which an amount of laundry in the washing machine is determined based on a computed average of pulse width modulation values at the time of stopping the drive of a motor and the motor's rotational angle as the motor freewheels to a stop.

Generally speaking, a washing machine is an apparatus for washing laundry by performing washing, rinsing, and dewatering steps in accordance with a wash course as selected by a user Washing machines are typically categorized according to washing type and may include pulsator, agitator, and drum types.

To perform washing using a washing machine in which laundry has been placed, a wash course is selected to determine a wash pattern, water is supplied to the washing machine according a predetermined water level based on a sensed amount of laundry in the washing machine, and washing is performed based on the predetermined water level. After the water reaches the predetermined level, however, a motor is driven to perform washing. In doing so, the laundry absorbs a portion of the water, and the water level is lowered such that water should be re-supplied until reaching the desired level. Accordingly, it is difficult to accurately sense the amount of laundry in the washing machine.

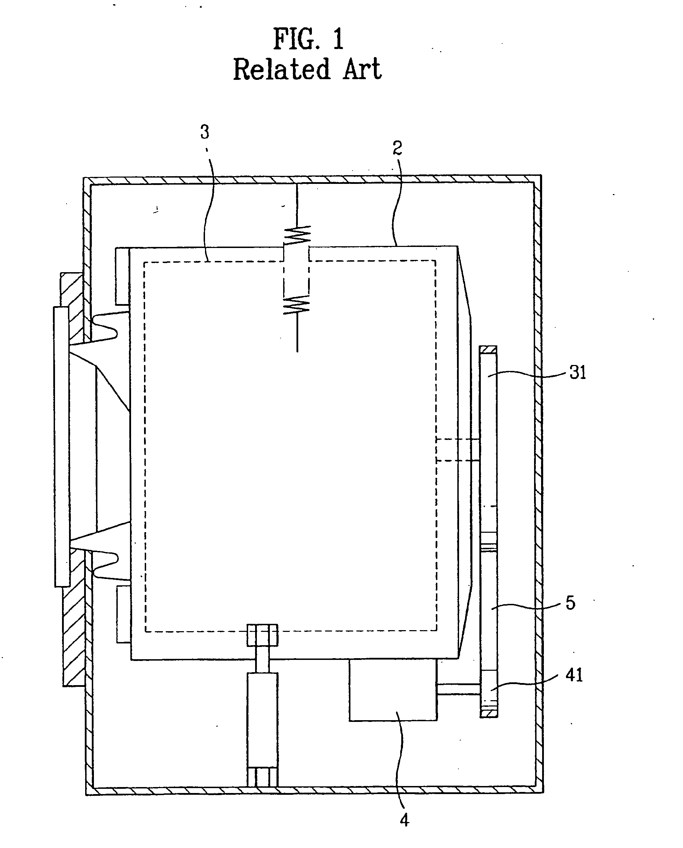

A general drum-type washing machine, as shown in FIG 1, is comprised of a tub 2 for holding washing water and a drum 3 for holding laundry, rotatably installed in the tub and receiving a drive force of a motor 4 via a belt 5 and pulleys 41 and 31 to perform washing related steps. With laundry placed inside the drum 3, the tub 2 is filled with water to a predetermined level. Under such a load, the motor 4 is driven under the control of a microcomputer (not shown), to proceed the washing, rinsing, and dewatering steps. Once a washing step is initiated, water is supplied to the tub 2 to a predetermined level, and the motor 4 is driven to rotate the drum 3 forward and reversely so that the laundry is evenly soaked in the water, whereupon the laundry partially absorbs the water so that the water level drops below the predetermined level.

The microcomputer of the above washing machine detects the water level to determine whether a water re-supply operation is needed. That is, if the water level has dropped below the predetermined level, it is determined that a water re-supply operation is needed, in which case the rotation (drive) of the drum 3 is stopped while water is re-supplied to the predetermined level, after which the rotation of the drum 3 begins anew. The microcomputer repeats the above steps until a predetermined time expires, while counting the number of the water re-supply operations, to determine the amount of laundry based on the counted number of the water re-supply operations during the predetermined time. To accomplish this, the microcomputer is provided with a lookup table for storing a set of reference values, which are preset for a given washing machine, to determine the laundry amount as being one of a predetermined set of laundry loads, e.g., a small, medium, or large laundry load. The reference values can be known since a larger laundry load absorbs more water and results in a greater number of water re-supply operations; conversely, fewer water re-supply operations would indicate smaller laundry loads.

After the desired water supply level is reached through a number of water re-supply operations, the washing step is executed based on a laundry amount determined by the above process. In such a method, however, the time for the water supply to reach the desired level is excessive, which unnecessary prolongs the washing step and tends to waste water. Moreover, a determination of the laundry amount using a lookup table is inherently inaccurate.

A full-automated washing machine and full-automated washing and drying machine is known from GB 2 247 250 A. In the machine, a clothes amount is detected at the time that the operation is started. In detecting the clothes amount, a drum serving as a container is once started and subsequently a power supply for a motor driving the drum is turned off to cause the drum to continue rotating by inertia and then stop, so that a value corresponding to an overrunning amount of the drum may be determined. Moreover, upon starting with power that gradually varies from a low level to a high level a value corresponding to a level of power supplied at that time (minimum level of power necessary for starting the motor) is determined.

A method for the washing of laundry in a motor-driven washing machine is known from US 2002/0029428A1. Power drawn by the electric motor driving the drum of the washing machine can be detected during a normal washing phase, or also when the motor is being accelerated up to a predetermined speed of rotation is being maintained. The step of determining the power drawn is effected by measuring the motor current, the motor speed and the electric voltage applied to the motor. The measured value is used for determining a loading of the drum.

US 5,341,452 discloses a method of cyclically accelerating an electric motor for use during an agitation cycle in a laundry machine. A desired speed, direction of rotation and acceleration time is set and power is supplied to the motor in a series of incremental steps, each successive step corresponding to an increase in the level of power applied during the previous step. The steps are initially estimated to be sufficient to enable sufficient energy to be supplied to the motor for it to reach the desired speed in the acceleration time. The speed of the motor is monitored and the steps of accelerating the motor are repeated with the series of incremental steps adjusted to adjust the supply of energy to the motor dependent on the speed reached in the acceleration time of the previous cycle.

A drum type washing machine with laundry weight detecting means is known from EP 1 201 811 A2. The drum type washing machine includes a drum for accommodating laundry and a variable speed electric motor for rotating the drum. A rise time is detected when the drum or the motor is accelerated from a first predetermined rotational speed to a second predetermined rotational speed while a predetermined constant power is being supplied to the motor. A fall time is detected when the drum or the motor is decelerated from a third predetermined rotational speed to a fourth predetermined rotational speed while the motor is in a free running state. A weight of the laundry in the drum is detected on the basis of the detected rise and fall times. A balance of the laundry in the drum is detected. The detected weight is compensated according to a result of balance detection.

A further drum type washing machine is known from GB 2 325 245 A. The drum type washing machine has a drum for receiving laundry, comprises speed detection means for detecting the revolution speed of either the drum or a motor arranged to drive the drum. First calculation means are provided to calculate a first angular acceleration after the speed detection means detects predetermined revolution speeds while the motor is accelerated, and second calculation means are provided to calculate a second angular acceleration after the speed detection means detects predetermined revolution speeds while the motor is decelerating in a de-energised free-running state. Load determination means determine the load of the drum according to the first and second angular accelerations.

US 4,857,814 discloses a control apparatus for an electric motor having sensing devices which sense the frequency and polarity of EMFs in the motor windings down to a condition where the rotor is in condition for reversing, and causing reversing of the motor when the frequency is such as to allow reversing and the polarits of selected winding is at or near a zero crossing between positive and negative polarities. Cyclical reversal is effected by measuring the time the rotor takes to coast from a "power off' condition to the condition for reversing and with an electronically commutated motor reversing can usually be effected in one commutation period. The motor is used in a clothes washing machine or similar application where rapid reversal is required or timing of the time from one reversal to the next is required to be constant.

Another clothes washing machine comprising a washing tub, a drum rotatably arranged inside said washing tub and adapted to accommodate a wash load and an electric motor adapted to rotatably drive said drum at differentiated rotational speeds is known from EP 0 704 568 A1. At the beginning of the washing cycle, the drum is driven so as to rotate at progressively increasing speed until a first preset speed is reached. Said first preset speed is then maintained during a first preset period of time, wherein the power supply to said electric motor is cut off, the drum is allowed to rotate by the force of inertia for a second preset period of time, means being provided which are adapted to calculate the weight of the wash load out of said detected process parameters. During said first period of time, in which the drum rotates under steady-state conditions, the pull-in torque of said motor is measured, whereas the instantaneous rotational speed of the drum is detected at the end of said preset period of time in which the drum is allowed to rotate by the force of inertia.

US 5,507,054 discloses a method for determining a mass of wet laundry in a washing machine being driven by an rpm-controlled universal motor with the aid of controller variables. The drum is operated before and/or during a spin cycle within first, second and third phases in a mass determining segment. The drum is operated in the first phase with a delayed rpm rise up to a final rpm above an application rpm at which the laundry is applied to a wall of the drum, and near but below a resonant rpm of a drive system. The drum is operated in the second phase with a constant command rpm equal to the final rpm of a ramp. The drum is operated in the third phase with an rpm running down to a minimum rpm without being driven, and with the rpm still being high enough to prevent a previously developed ring of laundry from separating or more slightly separating from the drum wall. A length of time is measured from a time when the drive is shut off until a time when the minimum rpm is reached, as a gauge for the mass of laundry.

Accordingly, the present invention is directed to a washing machine control method that substantially obviates one or more of the problems due to limitations and disadvantages of the related art.

An object of the present invention, which has been devised to solve the foregoing problem, lies in providing a washing machine control method, which conserves water and reduces the time required for performing a washing step, by accurately sensing a laundry amount prior to executing the washing step.

It is another object of the present invention to provide a washing machine control method by which an accurate laundry amount can be determined.

Additional features and advantages of the invention will be set forth in the description which follows, and in part will be apparent to those having ordinary skill in the art upon examination of the following or may be learned from a practice of the invention. The objectives and other advantages of the invention will be realized and attained by the subject matter particularly pointed out in the specification and claims hereof as well as in the appended drawings.

The above object is solved in a washing machine control method comprising the steps of the preamble of independent claim 1 by the features of the characterising part of independent claim 1. Preferred embodiments are defined in the dependent claims.

According to embodiments of the present invention, there is provided a washing machine control method comprising steps of accelerating a motor to a target rotational speed, by periodically applying to the motor a pulse width modulation (PWM) signal having a predetermined duty ratio; storing in a memory a set of PWM values corresponding to the signal applied in said accelerating step, by sensing a rotational speed of the motor; outputting a PWM signal having a duty ratio of zero, after the sensed motor speed reaches the target rotational speed, to allow the motor to freewheel to a stop; computing an average of the stored PWM values; measuring a rotational angle of the motor as the motor freewheels to a stop; and calculating a laundry amount estimation value based on the average of the stored PWM values and the motor's rotational angle. Preferably, the method further comprises a step of determining a laundry amount by comparing the calculated laundry amount estimation value to a set of laundry amount reference values stored in a lookup table.

It is to be understood that both the foregoing explanation and the following detailed description of the present invention are exemplary and illustrative and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG 1 is a cross-sectional view of a general drum-type washing machine;
FIG 2 is a flowchart of a washing machine control method according to the present invention; and
FIG. 3 is a graph of motor speed over time, for explaining washing machine control method according to the present invention.

Reference will now be made in detail to the preferred embodiment of the present invention, examples of which are illustrated in the accompanying drawings. Throughout the drawings, like elements are indicated using the same or similar reference designations where possible.

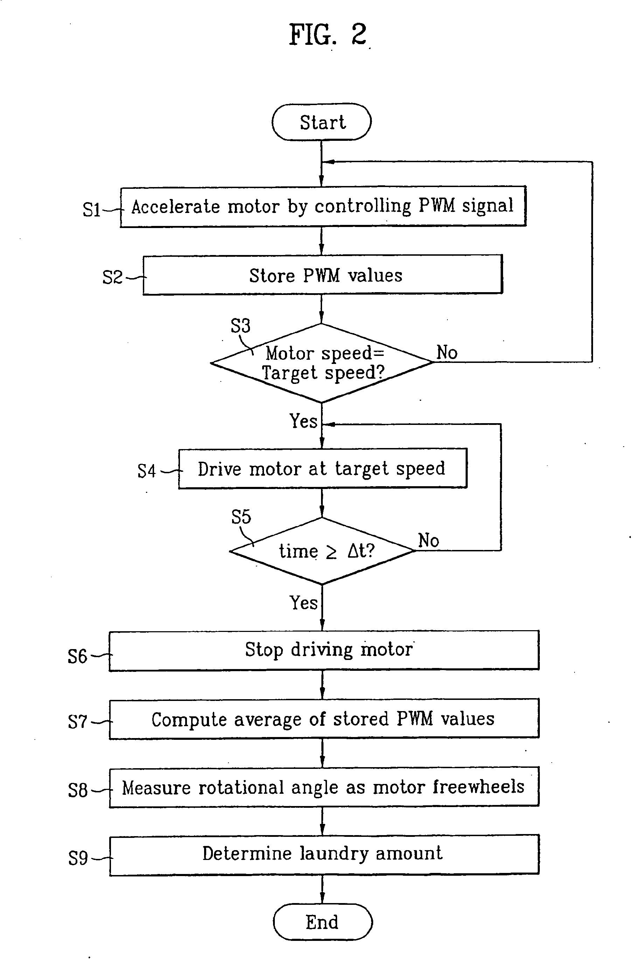

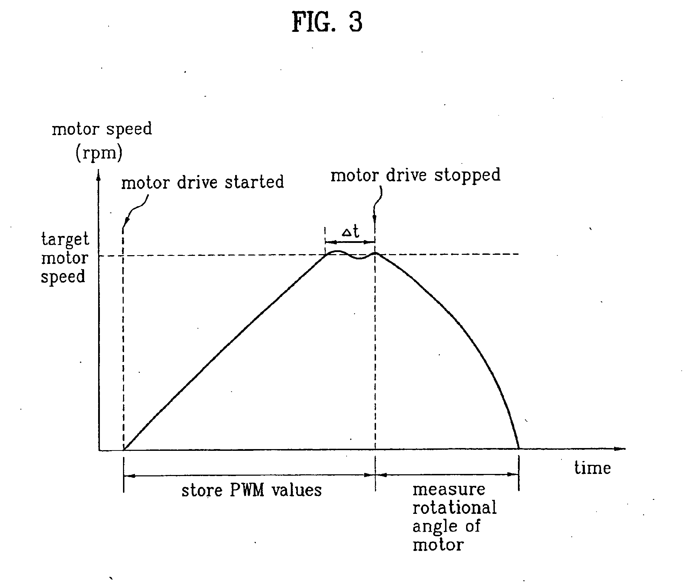

FIG 2 illustrates a washing machine control method according to the present invention, which is adopted by the general washing machine shown in FIG 1. The graph of FIG 3 plots motor speed (rpm) over time, as a motor of a drum-type washing machine adopting the method of the present invention is driven under the control of a microcomputer.

Referring to FIG 2, with laundry placed in a drum and a washing step initiated after selecting a wash cycle, the microcomputer of the washing machine outputs a motor drive signal for driving a motor, to rotate the drum by a rotational torque of the motor (S1). The motor drive signal is a pulse width modulation (PWM) signal, which is controlled to have a predetermined duty ratio. As the motor accelerates, the microcomputer periodically, for example, at a 4ms rate, senses the motor speed and compares the sensed speed to a target speed to determine a set of values corresponding to the PWM signal based on a detected speed differential. The PWM values, which are the applied duty ratios of the controlled PWM signal, are stored (S2) in a memory of the microcomputer for later computation.

The above acceleration and storage of corresponding PWM values continues until the motor speed reaches a target rotational speed measured in revolutions per minute (rpm). Once the rotational speed of the motor reaches the target speed (S3), the microcomputer controls the PWM value so that the rotational speed of the motor is held steady over a predetermined time Δt (S4 and S5), during which time the microcomputer continues to store the applied PWM values, which remain substantially constant in correspondence to the target speed. Thus, the stored PWM values are all the values resulting from the PWM signal applied to the motor, from a motor drive initiating point to the time of discontinuing the drive of the motor.

Upon expiration of the predetermined time Δt, the drive of the motor is stopped (S6), but its rotation continues (freewheels) by inertia. At the time of stopping the motor drive, i.e., upon output a motor drive signal having a duty ratio of zero, the microcomputer computes (S7) an average of the stored PWM values, i.e., the values stored since initiation of the washing step. Meanwhile, the microcomputer measures (S8) a rotational angle of the motor as freewheeling continues and the motor slows to a stop, i.e., rpm = 0. The laundry amount is determined (S9), using a calculated laundry amount estimation, based on the computed average of the PWM values at the time of stopping the motor's drive and the rotational angle of the motor as the motor freewheels, which are characteristic operational properties of a given washing machine's motor. The ultimately determined laundry amount is reached based on a relation between an assumed laundry amount, set according to the selected wash cycle, and a set of laundry amount reference values determined for a given model of washing machine through a repeated testing of a sample of the washing machine and stored in a lookup table of a microcomputer's memory.

The estimated laundry amount (A*ₑₛₜ*) is calculated as A*ₑₛₜ* = w₁PWM*ₐᵥₑ* + w₂θ*ₘₒₜₒᵣ*, where PWM*ₐᵥₑ* is the computed average of the stored PWM values, θ*ₘₒₜₒᵣ* is the motor's rotational angle, and w₁ and w₂ are weight constants arbitrarily assigned by the manufacturer according to the washing machine model. The weight constants are values resulting in a specific value, e.g., zero, of the laundry amount estimation when the laundry amount sensing procedure is performed by driving the drum-type washing machine without a load.

The present invention enables an accurate determination of the laundry amount, using the average of the PWM values during acceleration and then the freewheeling rotational angle, since the operational properties of a driven motor are proportional to a load amount. That is, since a small amount of laundry applies a small load to the motor, the resulting PWM value is correspondingly small, while a large amount of laundry applies a large load to the motor, so that the resulting PWM value is correspondingly large. In other words, the size of the laundry load directly determines a frictional force existing between the motor and the drum holding the laundry, and the required duty ratio of the PWM signal applied to the motor for a given acceleration increases in direct proportion to the laundry load.

Meanwhile, the freewheeling rotational angle is similarly proportional to the size of the laundry load, i.e., laundry amount, since the magnitude of an inertial force acting on the motor corresponds to the laundry amount. That is, the inertial force is in direct proportion to the amount of laundry.

By estimating the laundry amount using the PWM value applied to the motor and the motor's freewheeling rotational angle, the method of the present invention enables the generation of an accurate laundry amount value through an iteration of the laundry amount estimation and the laundry amount assumed at the time of initiating the wash step. Therefore, a washing machine adopting the present invention can more accurately determine the laundry amount, so that a water supply level and a washing time can be appropriately set, thus conserving water and reducing the time required for performing a washing step.

It will be apparent to those skilled in the art that various modifications and variations can be made in the present invention without departing from the spirit or scope of the invention. Thus, it is intended that the present invention cover such modifications and variations, provided they come within the scope of the appended claims and their equivalents.

According to an aspect, this document discloses a washing machine control method comprising steps of: accelerating a motor to a target rotational speed by applying a drive signal and thereafter allowing the motor to freewheel to a lower rotational speed; storing at least one drive signal value which is representative of the drive signal during the accelerating and/or measuring a rotational angle of the motor during allowing the motor to freewheel; and calculating a laundry amount estimation value based on the at least one stored drive signal value and/or the measured rotational angle.

The drive signal during the accelerating may be determined based on at least one rotational speed sensed during the accelerating.

The drive signal may comprise a pulse width modulation (PWM) signal having a duty ratio which may be determined based on the at least one sensed rotational speed.

The at least one drive signal value may be a PWM value corresponding to the signal applied in the accelerating step, by sensing a rotational speed of the motor.

The calculation of the laundry amount may include computing an average of plural drive signal values.

The lower speed may be zero, i.e. the motor may be allowed to freewheel to a stop.

The measured rotational angle may be a rotational angle of the motor as the motor freewheels to the stop.

## Claims

1. A washing machine control method comprising steps of:
(S1) accelerating a motor to a target rotational speed by applying a drive signal;
(S2) storing at least one drive signal value that is representative of the drive signal during the accelerating step;
(S6) allowing the motor to freewheel to a lower rotational speed;
(S8) measuring a value of the motor during allowing the motor to freewheel; and
calculating a laundry amount estimation value based on the at least one stored drive signal value and the value measured during allowing the motor to freewheel;
**characterized in that**
the value measured during allowing the motor to freewheel (S8) is a rotational angle (Φ) of the motor.

2. The method according to claim 1, wherein
the step of accelerating (S1) the motor to a target rotational speed is performed by periodically applying to the motor a pulse width modulation (PWM) signal having a predetermined duty ratio;
the at least one drive signal value is a set of PWM values corresponding to the signal applied in said accelerating step, by sensing a rotational speed of the motor, and comprises storing (S2) the set of PWM values in a memory;
the step of (S6) allowing the motor to freewheel is performed by outputting a PWM signal having a duty ratio of zero, after the sensed motor speed reaches (S4) the target rotational speed, to allow the motor to freewheel to a stop;
the method further comprises the step of (S7) computing an average of the stored PWM values;
the step of (S8) measuring a value of the motor during allowing the motor to freewheel is performed by measuring the rotational angle of the motor as the motor freewheels to a stop; and
the step of calculating a laundry amount estimation value is performed based on the average of the stored PWM values and the motor's rotational angle (Φ).

3. The method according to claim 2, further comprising a step of (S9) determining a laundry amount by comparing the calculated laundry amount estimation value to a set of laundry amount reference values stored in a lookup table.

4. The method according to claim 2 or 3, wherein the laundry amount estimation value equals w₁PWM*ₐᵥₑ* + w₂θ*ₘₒₜₒᵣ*, where PWM*ₐᵥₑ* is the computed average of the stored PWM values, θ*ₘₒₜₒᵣ* is the measured rotational angle, and w₁ and w₂ are weight constants.

5. The method according to claim 4, wherein the weight constants w₁ and w₂ are arbitrarily set to render the laundry amount estimation as a specific value when the motor is driven without a load.

6. The method according to one of claims 2 to 5, wherein the motor is driven (S4) at a constant speed corresponding to the target rotational speed for a predetermined time before said step (S6) of allowing the motor to freewheel by outputting a PWM signal having a duty ratio of zero.

7. The method according to one of claims 2 to 6, wherein the stored PWM values of said average computing step (S7) are the PWM values corresponding to the PWM signal applied (S1) to to the motor, from a motor drive initiating point to the time of discontinuing the drive of the motor.

8. The method according to one of claims 2 to 7, wherein the PWM value is applied (S1) to the motor according to a 4 ms cycle.

9. A washing machine comprising
a tub (2) for holding washing water;
a drum (3) for holding laundry;
a driving motor (4) for moving laundry received in the washing machine; and
a microcomputer for controlling the motor (4); wherein the drum (3) is rotatably installed in the tub (2) and receives a drive force of the motor (4); and wherein the microcomputer is adapted to control the motor (4) by the control method according to one of claims 1 to 8.

## Patentansprüche

1. Verfahren zum Steuern einer Waschmaschine, umfassend die folgenden Schritte:
(S1) Beschleunigen eines Motors auf eine Zieldrehzahl durch Anwenden eines Antriebssignals;
(S2) Speichern mindestens eines Antriebssignalwertes, der für das Antriebssignal während des Beschleunigungsschritts repräsentativ ist;
(S6) Freilaufenlassen des Motors auf eine niedrigere Drehzahl;
(S8) Messen eines Wertes des Motors, während der Motor freilaufen gelassen wird; und
Berechnen eines Wäschemenge-Schätzwertes basierend auf dem mindestens einen gespeicherten Antriebssignalwert und dem Wert, der während des Freilaufenlassens des Motors gemessen wird;
**dadurch gekennzeichnet, dass**
der Wert, der während des Freilaufenlassens des Motors gemessen wird (S8), ein Drehwinkel (Φ) des Motors ist.

2. Verfahren gemäß Anspruch 1, wobei
der Schritt des Beschleunigens (S1) des Motors auf eine Zieldrehzahl durch regelmäßiges Anwenden eines Pulsdauermodulations-(PWM)-Signals, das ein vorbestimmtes Tastverhältnis hat, auf den Motor ausgeführt wird;
der mindestens eine Antriebssignalwert ein Satz von PWM-Werten ist, die dem Signal entsprechen, das in dem Beschleunigungsschritt durch Abtasten einer Drehzahl des Motors angewendet wird, und das Speichern (S2) des Satzes von PWM-Werten in einem Speicher umfasst;
der Schritt (S6) des Freilaufenlassens des Motors durch Ausgeben eines PWM-Signals mit einem Tastverhältnis von null ausgeführt wird, nachdem die abgetastete Motordrehzahl die Zieldrehzahl erreicht (S4), um den Motor bis zum Anhalten im freilaufen zu lassen;
das Verfahren ferner den Schritt (S7) des Berechnens eines Mittelwerts der gespeicherten PWM-Werte umfasst;
der Schritt (S8) des Messens eines Wertes des Motors während des Freilaufenlassens des Motors durch Messen des Drehwinkels des Motors ausgeführt wird, wenn der Motor bis zum Anhalten freiläuft; und
der Schritt des Berechnens eines Wäschemenge-Schätzwertes basierend auf dem Mittelwert der gespeicherten PWM-Werte und dem Drehwinkel (Φ) des Motors ausgeführt wird.

3. Verfahren gemäß Anspruch 2, ferner umfassend einen Schritt (S9) des Bestimmens einer Wäschemenge durch Vergleichen des berechneten Wäschemenge-Schätzwerts mit einem Satz von Wäschemenge-Referenzwerten, die in einer Nachschlagtabelle gespeichert sind.

4. Verfahren gemäß Anspruch 2 oder 3, wobei der Wäschemenge-Schätzwert gleich w₁PWM_{Mittelw} + w₂θ_{Motor} ist, wobei PWM_{Mittelw} der berechnete Mittelwert der gespeicherten PWM-Werte ist, θ_{Motor} der gemessene Drehwinkel ist und w₁ und w₂ Gewichtskonstanten sind.

5. Verfahren gemäß Anspruch 4, wobei die Gewichtskonstanten w₁ und w₂ willkürlich festgelegt werden, um die Wäschemengenschätzung als einen spezifischen Wert anzugeben, wenn der Motor ohne Last angetrieben wird.

6. Verfahren gemäß einem der Ansprüche 2 bis 5, wobei der Motor bei einer konstanten Drehzahl angetrieben wird (S4), die der Zieldrehzahl für eine vorbestimmte Zeit vor dem Schritt (S6) des freilaufenden Motors entspricht, durch Ausgeben eines PWM-Signals, das ein Tastverhältnis von null aufweist.

7. Verfahren gemäß einem der Ansprüche 2 bis 6, wobei die gespeicherten PWM-Werte des Mittelwertberechnungsschritts (S7) die PWM-Werte sind, die dem PWM-Signal entsprechen, das auf den Motor von einem Motorantriebs-Anfangspunkt bis zum Zeitpunkt des Unterbrechens des Antriebs des Motors angewendet wird (S1) .

8. Verfahren gemäß einem der Ansprüche 2 bis 7, wobei der PWM-Wert auf den Motor gemäß einem 4-ms-Zyklus angewendet wird (S1)

9. Waschmaschine, umfassend
eine Wanne (2) zum Halten von Waschwasser;
eine Trommel (3) zum Halten von Wäsche;
einen Antriebsmotor (4) zum Bewegen der Wäsche, die in der Waschmaschine aufgenommen ist; und
einen Mikrocomputer zum Steuern des Motors (4);
wobei die Trommel (3) in der Wanne (2) drehbar installiert ist und eine Antriebskraft des Motors (4) aufnimmt; und
wobei der Mikrocomputer ausgelegt ist, um den Motor (4) durch das Steuerverfahren gemäß einem der Ansprüche 1 bis 8 zu steuern.

## Revendications

1. Procédé de commande d'une machine à laver comprenant les étapes de :
(S1) accélération d'un moteur jusqu'à une vitesse de rotation cible par application d'un signal d'entraînement ;
(S2) mémorisation d'au moins une valeur de signal d'entraînement qui est représentative du signal d'entraînement pendant l'étape d'accélération ;
(S6) autorisation du moteur à tourner en roue libre jusqu'à une vitesse de rotation inférieure ;
(S8) mesure d'une valeur du moteur pendant que le moteur est autorisé à tourner en roue libre ; et
calcul d'une valeur estimée de quantité de linge sur la base de ladite au moins une valeur de signal d'entraînement mémorisée et la valeur mesurée pendant que le moteur est autorisé à tourner en roue libre ;
**caractérisé en ce que**
la valeur mesurée pendant que le moteur est autorisé à tourner en roue libre (S8) est un angle de rotation (Φ) du moteur.

2. Procédé selon la revendication 1, dans lequel l'étape (S1) d'accélération du moteur jusqu'à une vitesse de rotation cible est mise en oeuvre en appliquant périodiquement au moteur un signal de modulation de largeur d'impulsion (PWM) ayant un régime d'utilisation prédéterminé ;
ladite au moins une valeur de signal d'entraînement est un jeu de valeurs de PWM correspondant au signal appliqué au cours de ladite étape d'accélération, par détection d'une vitesse de rotation du moteur, le jeu de valeurs de PWM dans une mémoire étant mémorisé (2) dans une mémoire ;
l'étape (S6) d'autorisation du moteur à tourner en roue libre est mise en oeuvre en produisant un signal de PWM ayant un régime d'utilisation de zéro, après que la vitesse de moteur détectée atteint (S4) la vitesse de rotation cible, pour permettre au moteur de tourner en roue libre jusqu'à un arrêt ;
le procédé comprenant, en outre :
l'étape (S7) de calcul d'une moyenne des valeurs de PWM mémorisées ;
l'étape (S8) de mesure d'une valeur du moteur pendant que le moteur est autorisé à tourner en roue libre, mise en oeuvre par mesure de l'angle de rotation du moteur tandis que le moteur tourne en roue libre jusqu'à un arrêt ;
l'étape de calcul d'une valeur estimée de quantité de linge mise en oeuvre sur la base de la moyenne des valeurs de PWM mémorisées et de l'angle de rotation du moteur (Φ).

3. Procédé selon la revendication 2, comprenant, en outre, une étape (S9) de détermination d'une quantité de linge par comparaison d'une valeur estimée de quantité de linge calculée à un jeu de valeurs de référence de quantité de linge mémorisées dans une table de consultation.

4. Procédé selon la revendication 2 ou 3, dans lequel la valeur estimée de quantité de linge est égale à
w₁PWMₐᵥₑ + w_{2Φmoteur}, où PWMₐᵥₑ est la moyenne calculée des valeurs de PWM mémorisées, Φₘₒₜₑᵤᵣ est l'angle de rotation mesuré, et w₁ et w₂ sont des constantes de poids.

5. Procédé selon la revendication 4, dans lequel les constantes de poids w₁ et w₂ sont fixées arbitrairement pour donner à l'estimation de quantité de linge une valeur spécifique lorsque le moteur est entraîné sans charge.

6. Procédé selon l'une quelconque des revendications 2 à 5, dans lequel le moteur est entraîné (S4) à une vitesse constante correspondant à la vitesse de rotation cible pendant une durée prédéterminée avant ladite étape (S6) autorisant le moteur à tourner en roue libre en produisant un signal de PWM ayant un régime d'utilisation de zéro.

7. Procédé selon l'une quelconque des revendications 2 à 6, dans lequel les valeurs de PWM mémorisées de ladite étape (S7) de calcul de moyenne sont les valeurs de PWM correspondant au signal de PWM appliqué (S1) au moteur, depuis un point de départ de l'entraînement du moteur jusqu'au moment de l'interruption de l'entraînement du moteur.

8. Procédé selon l'une quelconque des revendications 2 à 7, dans lequel la valeur de PWM est appliquée (S1) au moteur selon un cycle de 4 ms.

9. Machine à laver comprenant :
une cuve (2) pour contenir de l'eau de lavage ;
un tambour (3) pour contenir du linge ;
un moteur d'entraînement (4) pour bouger le linge reçu dans la machine à laver ; et
un microordinateur pour commander le moteur (4) ;
le tambour (3) étant monté rotatif dans la cuve (2) et recevant, du moteur, une force d'entraînement ;
le microordinateur étant adapté à commander le moteur (4) par mise en oeuvre du procédé de commande selon l'une quelconque des revendications 1 à 8.
